# EUROPÄISCHE PATENTSCHRIFT

(11) **EP 2 629 954 B1**
(45) Veröffentlichungstag und Bekanntmachung des Hinweises auf die Patenterteilung: **06.08.2014**
(21) Anmeldenummer: 11772890.7
(22) Anmeldetag: 16.10.2011
(51) Int. Cl.: B29C 45/66, B29C 45/68

(54) **SPRITZGIESSMASCHINE MIT WENIGSTENS ZWEI KNIEHEBELMECHANISMEN**
INJECTION MOULDING APPARATUS WITH TOGGLE MECHANISM
DISPOSITIFE D'INJECTION AVEC PRESSE À GENOUILLÈRE

(30) Priorität: 18.10.2010 DE 102010048560
(43) Veröffentlichungstag der Anmeldung: 28.08.2013
(73) Patentinhaber: Arburg GmbH + Co. KG, 72290 Lossburg (DE)
(72) Erfinder: KEINATH, Renate, 72336 Balingen (DE)
(74) Vertreter: Reinhardt, Harry
(86) Internationale Anmeldenummer: PCT/EP2011/005190
(87) Internationale Veröffentlichungsnummer: WO 2012/052138

(56) Entgegenhaltungen:
- EP-A1- 0 383 935
- WO-A1-01/38069
- DE-A1-102006 054 072
- DE-C2- 19 923 849
- DE-U1- 20 120 612
- FR-A- 1 364 693
- JP-U- 62 087 813
- US-A1- 2002 068 109

## Beschreibung

Die Erfindung betrifft eine Spritzgießmaschine zur Verarbeitung von Kunststoffen und anderer plastifizierbarer Materialien mit wenigstens zwei Kniehebelmechanismen nach dem Oberbegriff des Anspruches 1.

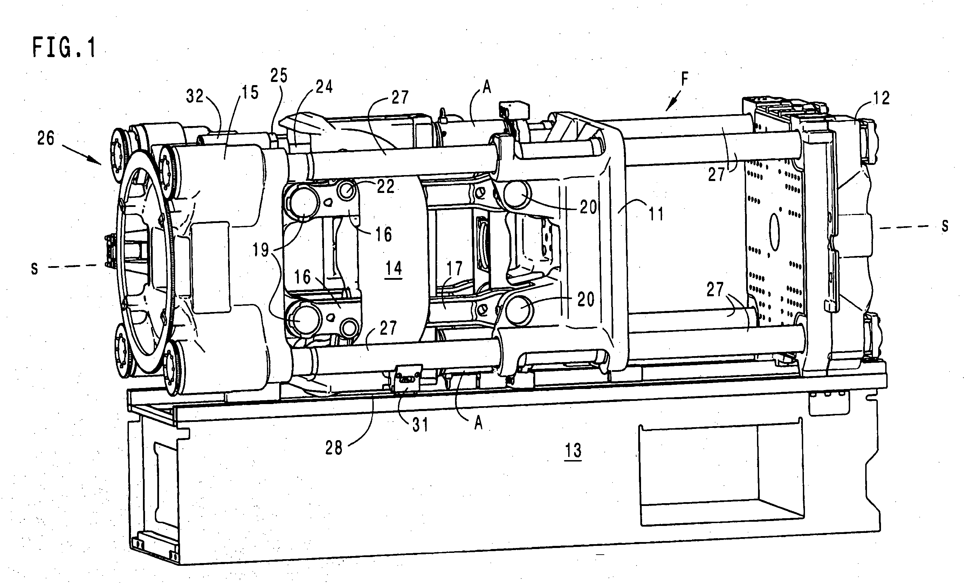

Aus der WO 01/38069 A1 ist eine dem Oberbegriff des Anspruches 1 zugrunde liegende Spritzgießmaschine mit einer Formschließeinheit bekannt, an der über zwei gesonderte als Linearmotoren ausgebildete Antriebseinheiten zwei Kniehebelmechanismen angetriebenen werden. Gemäß dem Ausführungsbeispiel der Fig.1 ist ein Betätigungsrahmen vorgesehen, in dem die Linearmotoren aufgenommen sind und der gegenüber einer Endplatte und dem stationären Formträger beweglich ist. Im unteren Bereich ist ein Holm vorgesehen, der gleichzeitig als Induktorkamm für den Linearmotor ausgeführt ist und stationären Formträger und Endplatte miteinander verbindet. Im oberen Bereich ist eine derartige Führung nicht vorgesehen.

Aus der EP 0 383 935 A1 ist eine Spritzgießmaschine mit einer Formschließeinheit bekannt, an der über zwei gesonderte, als Servomotoren ausgebildete Antriebseinheiten zwei Kniehebelmechanismen zur Regelung der Formparallelität geregelt angetrieben werden. Die Servomotoren treiben Spindeln an, die mit einer Mutter in Verbindung stehen, die so gelagert ist, dass sie den Kniehebelmechanismus betätigt. An einer rückseitigen Abstützplatte sind die Antriebsmotoren als auch eine Formhöhenverstelleinrichtung befestigt, sodass die bewegten Massen reduziert sind.

Aus der DE 10 2006 054 072 A1 ist eine Formschließeinheit mit zwei Kniehebelmechanismen bekannt, die von einem mittigen hydraulischen Zylinder an einer beweglichen Betätigungsplatte angetrieben werden. Eine Regelung der Anlagekraft ist damit nicht möglich. Dies gilt auch für den grundsätzlich analogen Aufbau nach der US 2002/068 109 A1, bei der statt des Hydraulikzylinders ein Spindelantrieb verwendet wird (So auch JP 62 087813 U).

Aus der DE 201 20 612 U1 ist eine Formschließvorrichtung mit einem Kniehebelmechanismus bekannt, wobei an einer Zwischenplatte eine Verstellvorrichtung zum Verändern des Abstandes zwischen der Widerlagerplatte und der Zwischenplatte vorgesehen ist.

Aus der FR 1 364 693 A ist eine Formschließeinheit mit einem Kniehebelmechanismus bekannt, bei der der die Kniehebel antreibende Hydraulikzylinder mittig in einer Formhöhenverstelleinrichtung aufgenommen ist, die über ein Schraubgewinde an der Abstützplatte gelagert ist.

Aus der DE 199 23 849 C2 ist eine Formschließeinheit für eine Spritzgießmaschine bekannt, an der über eine Schubkurbel ein doppelter Kniehebelmechanismus angetrieben wird. Die Schubkurbel und ihre Antriebseinheit sind an einem rückseitigen Abstützelement gelagert.

Aus der DE 10 2006 061 969 B4 ist eine Spritzgießmaschine mit zwei Kniehebelmechanismen bekannt, die als Y-Kniehebel ausgebildet sind. Die Antriebsmotoren sind insofern quer zur Antriebsachse angeordnet.

Ausgehend von diesem Stand der Technik liegt der Erfindung die Aufgabe zugrunde, eine Spritzgießmaschine der eingangs genannten Gattung derart weiter zu bilden, dass die Parallelität der Formträger sowohl im statischen als auch im dynamischen Zustand beeinflussbar ist.

Diese Aufgabe wird durch eine Spritzgießmaschine mit den Merkmalen des Anspruches 1 gelöst.

Die Kniehebelmechanismen werden in bekannter Weise durch gesonderte Antriebseinheiten bzw. -mechanismen angetrieben, jedoch sind diese Antriebseinheiten jetzt an einer bei der Kniehebelbewegung ebenfalls bewegten Lagerplatte gelagert, an der die Betätigungselemente für die Kniehebelmechanismen gelagert sind. Durch die Kniehebelbewegung bewegt sich diese Platte zu Beginn der Bewegung etwa im gleichen Verhältnis wie der bewegliche Formträger, gegen Ende der Formbewegung bewegt sich jedoch diese Lagerplatte immer noch im Millimeter-Bereich, während die Formträger bereits im Formschluss sind. Dadurch kann die Position der Lagerplatte als Referenzmaß für die Werkzeugbewegung verwendet werden, da an ihr das Übersetzungsverhältnis beim Formschluss am genauesten ist. Während im Stand der Technik eine Regelung über die Antriebsmotoren vor allem bei der Formschlussbewegung erfolgt, kann durch die jetzt gewählte Ausgestaltung bei entsprechender Regelung die damit höhere Präzision auch beim Formschluss noch beeinflusst werden. Zur weiteren Erhöhung der Präzision ist die Lagerplatte an den zwischen stationärem Formträger und Abstützelement angeordneten Kraftübertragungselementen wie Holmen und ggf. am Maschinenfuß geführt.

Durch eine Lagerung der Antriebsmotoren selbst an der Lagerplatte erhöhen sich zwar die zu bewegenden Massen, jedoch wird dies bewusst in Kauf genommen, da sich insgesamt eine äußerst steife Platte ausbildet, die zugleich als Multifunktionsteil verwendbar ist. Zudem kann diese Lagerplatte mit Ihren Antriebseinheiten als eigenständige Baueinheit komplett vormontiert werden und dann in die Maschine eingebaut werden. Für den Hersteller bedeutet dies einerseits ein besseres Vorkonfektionieren, wobei an der Baueinheit auch bereits vor dem "Verheiraten" mit der restlichen Maschine Funktionstests durchgeführt werden können. Zudem ist es möglich, die gesamte Baueinheit für sich gesondert in fernere Länder zu versenden. Alternativ kann als Teil des Antriebsmechanismus eine Mutter oder Spindel an der Lagerplatte gelagert werden, so dass eine gitterrahmenartige Lagerplatte ausgebildet werden kann, der dann die vorkonfektionierte Antriebseinheit bei der Herstellung oder bei der späteren Wartung im Betrieb zugeführt werden kann. In beiden Fällen ist jedoch durch die Führung dieser Lagerplatte eine erhöhte Präzision gewährleistet.

Die Lagerplatte nimmt als Multifunktionsteil einerseits die Antriebseinheit auf, die den Motor wie z.B. einen Servomotor, aber auch Lager, Mutter und Spindel umfasst, besitzt die Lagerstellen für die Kniehebelbefestigung, weist aber auch Aufnahmen zur Führung der Platte auf. Neben der Funktion des Antreibens der Kniehebel, die an dieser Lagerplatte gelagert sind, kann durch die Führung der Lagerplatte gegenüber dem Rest der Maschine die Genauigkeit im Wechselspiel zwischen Öffnen und Schließen der Spritzgießform nachhaltig beeinflusst werden. Ebenso können Kühleinrichtungen für Lager, Mutter und Spindel an dieser Platte vorgesehen werden. Da diese Kühlung zum Beispiel in der Lagerplatte integriert werden kann, ergibt sich eine geometrische Genauigkeit für das gesamte System, was die Lebensdauer der Spritzgießmaschine ebenso steigert wie die Präzision bei der Herstellung von Spritzgießteilen.

Weitere Vorteile ergeben sich aus den Unteransprüchen und der nachfolgenden Beschreibung eines bevorzugten Ausführungsbeispiels.

Im Folgenden wird die Erfindung anhand von in den Figuren dargestellten Ausführungsbeispielen näher erläutert. Es zeigen:
- Fig. 1: eine dreidimensionale Seitenansicht einer auf einem Maschinenfuß angeordneten Formschließeinheit,
- Fig. 2: einen vertikalen Schnitt durch die Formschließeinheit von Fig. 1 in Höhe der Mittelachse in Strecklage der Kniehebelmechanismen bei geschlossener Spritzgießform,
- Fig. 3: eine Darstellung gemäß Fig. 2 bei geöffneter Spritzgießform,
- Fig. 4: einen vertikalen Schnitt durch die Lagerplatte mit den daran gelagerten Antriebseinheiten,
- Fig. 5: einen Schnitt nach Linie 5-5 von Fig. 2,
- Fig. 6: eine Darstellung gemäß Fig. 4 eines weiteren Ausführungsbeispiels mit am Abstützelement gelagerten Antriebseinheiten,
- Fig. 7: eine dreidimensionale Darstellung der Lagerplatte gemäß Fig. 6,
- Fig. 8: eine teilweise geschnittene Darstellung einer Antriebseinheit.

### Beschreibung bevorzugter Ausführungsbeispiele

### Ausführliche Beschreibung bevorzugter Ausführungsbeispiele

Die Erfindung wird jetzt beispielhaft unter bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

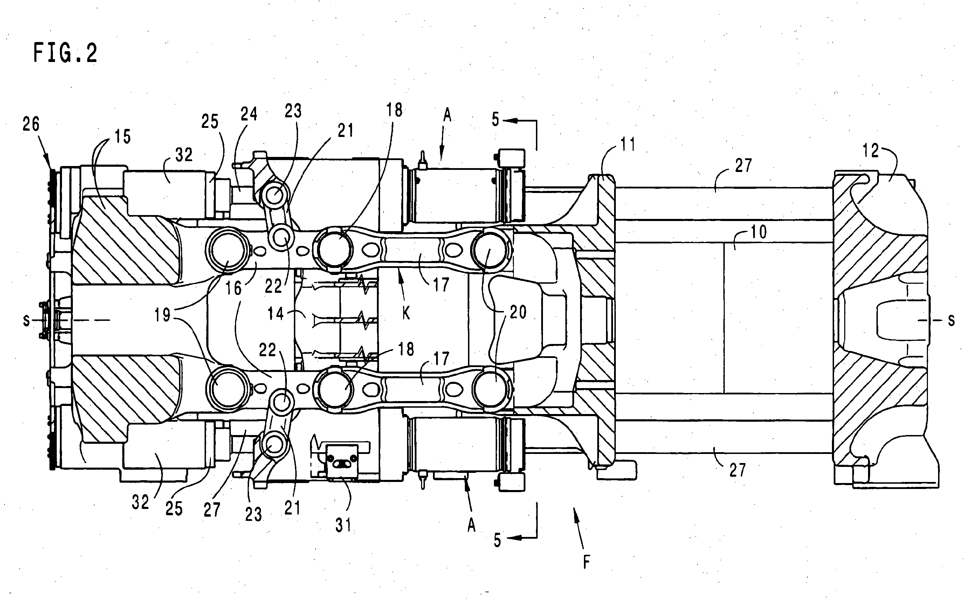

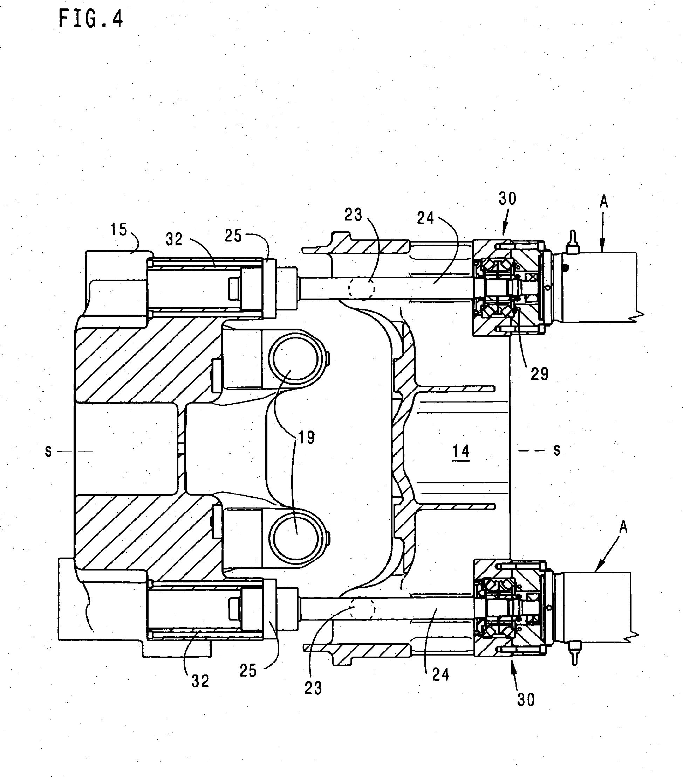

Die Figuren zeigen in zwei Ausführungsbeispielen eine Spritzgießmaschine zur Verarbeitung von Kunststoffen und anderer plastifizierbarer Massen wie pulverige, metallische oder keramische Massen, die wie bei einer Spritzgießmaschine üblich eine Formschließeinheit F auf einem Maschinenfuß 13 sowie eine zeichnerisch nicht dargestellte Spritzgießeinheit aufweist. Zwischen den Formträgern, nämlich einem stationären Formträger 12 und einem beweglichen Formträger 11, kann wenigstens eine Spritzgießform 10 bestehend aus mehreren Teilen aufgenommen werden. Wenigstens eine Kniehebelpaarung mit zwei Kniehebelmechanismen K, die über gesonderte Antriebseinheiten A einzeln antreibbar sind, sind zur Bewegung der Formträger aufeinander zu bis zum Formschluss der Spritzgießform 10 und zur Öffnungsbewegung voneinander weg zum Öffnen der Spritzgießform 10 in Schließrichtung s-s vorgesehen. Die Kniehebelmechanismen K sind an einer Lagerplatte 14, 14' gelagert. Wie sich insbesondere aus den Figuren 2 bis 4 bzw. 6 ergibt, sind die Antriebseinheiten an einer Lagerplatte 14, 14' gelagert, die bei der Schließbewegung und der Öffnungsbewegung in Schließrichtung bewegt wird. An der Lagerplatte sind die Lagerstellen 23, die in Fig. 4 deutlich zu erkennen sind, vorgesehen, an denen die Betätigungselemente für die wenigstens zwei Kniehebelmechanismen K gelagert sind. Grundsätzlich kann eine analoge Ausgestaltung bei mehr als zwei Kniehebelmechanismen vorgesehen werden.

Gemäß Fig. 2 ist der Kniehebelmechanismus K einenends an einem Formträger, im Ausführungsbeispiel am beweglichen Formträger 11, gelenkig gelagert und anderenends an einem Abstützelement 15 gelagert, wobei die Lagerplatte 14 zwischen dem Formträger und dem Abstützelement angeordnet ist. Grundsätzlich ist auch eine Ausgestaltung denkbar, bei der die wenigstens zwei Kniehebelmechanismen am stationären Formträger gelagert sind, wie dies zum Beispiel in der DE 10 2006 061 969 B4 gezeigt ist. Im Unterschied zu dort befindet sich hier jedoch die Lagerplatte zwischen Formträger und Abstützelement.

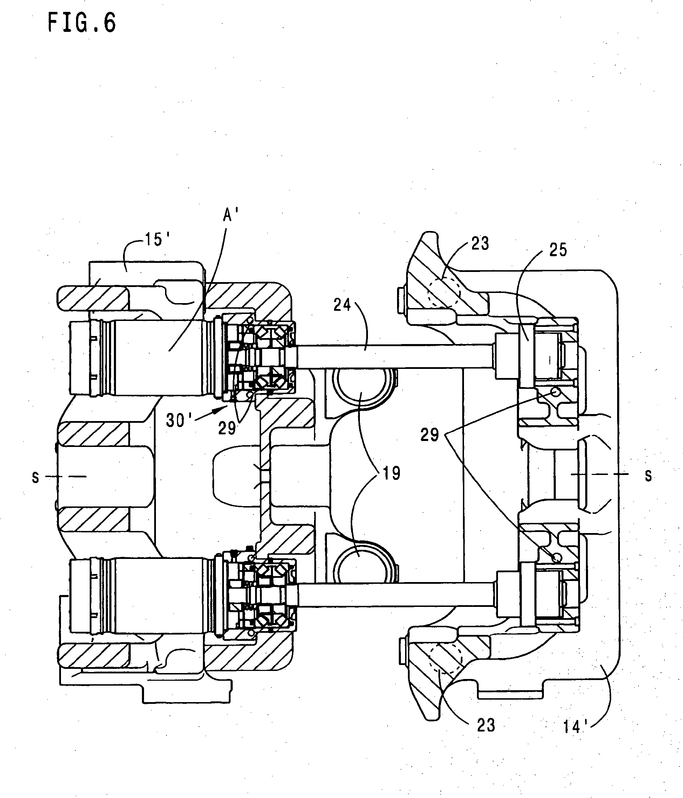

Fig. 4 zeigt in Verbindung mit Fig. 2, wie die Antriebseinheiten A gelagert sind. Einerseits ist ein Lager 30 für die Lagerung der Antriebseinheit A an der Lagerplatte 14 vorgesehen. Die Antriebseinheit, die im Ausführungsbeispiel ein servoelektrischer Motor mit zugeordnetem Spindelmechanismus ist und Gewinde- oder Rollenspindeln beliebiger Bauart aufweist, ist im Lagerbereich mit einer Kühlung durch Kühlkanäle 29 oder in Fig. 6 mit einem Kühlmantel 33 versehen. Alternativ zu den servoelektrischen Antriebseinheiten können jedoch auch hydraulische Antriebseinheiten eingesetzt werden, sofern die Lagerung des Antriebsmechanismus auf gleiche Weise erfolgt. Deutlich wird dabei auch die durch die Anordnung der Kniehebelmechanismen gewährleistete kurze Bauform der Schließeinheit.

Im ersten Ausführungsbeispiel der Fig. 1 bis 5 ist die Antriebseinheit einenends an der Lagerplatte 14 gelagert, während der zugehörige Antriebsmechanismus, also im Ausführungsbeispiel der Spindelmechanismus anderenends an dem Abstützelement 15 gelagert ist, an dem auch der Kniehebelmechanismus K im Ausführungsbeispiel gelagert ist. Diese Anordnung ist im Ausführungsbeispiel der Fig. 6 bis 8 umgekehrt, d.h. der Antriebsmotor ist in Fig. 6 am Abstützelement 15' gelagert, während die Mutter 25 an der Lagerplatte 14' gelagert ist. Beiden Ausführungsbeispielen ist die Führung der Lagerplatte 14, 14' in Schließrichtung s-s gemeinsam, einmal am Maschinenfuß 13, einmal an den Kraftübertragungselementen 27, wobei auch eine Kombination beider Führungen oder eine Führung an anderer Stelle der Spritzgießmaschine in Schließrichtung s-s möglich ist.

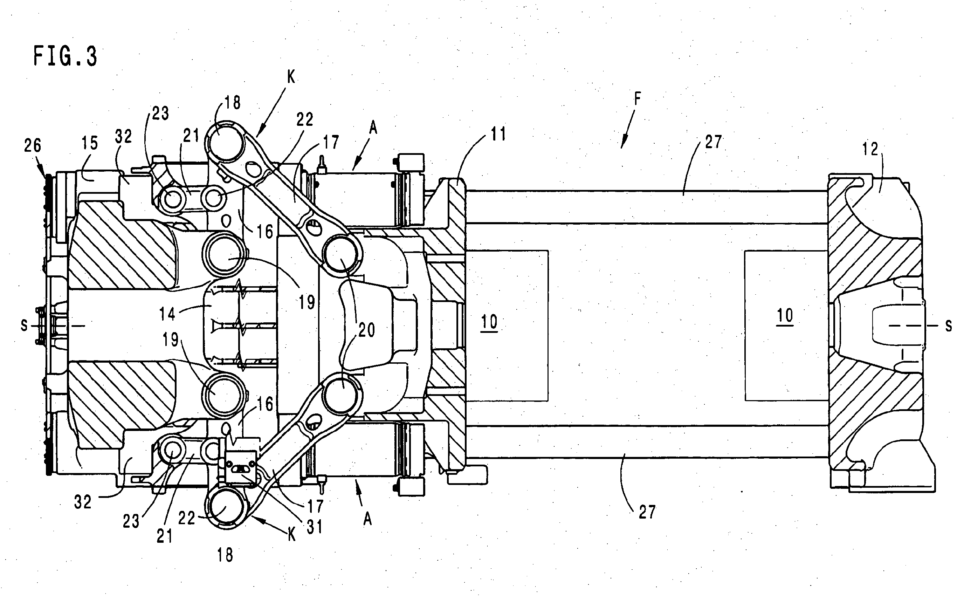

In Fig. 2 ist einerseits die Spindel 24 zu erkennen, andererseits auch die Lagerung für die Mutter 25. Da infolge der Rotation der Spindel 24 diese bei der Öffnungsbewegung, also bei einer Überführung aus einer Darstellung gemäß Fig.2 in eine Darstellung gemäß Fig. 3 sich mit der Lagerplatte 14 in den Figuren nach links bewegt, ist im Bereich der Mutter 25 ein Aufnahmegehäuse 32 vorgesehen, in die die Spindel 24 eintauchen kann. Die Spindel 24 wird von der an der Lagerplatte gelagerten Antriebseinheit A angetrieben, während die Mutter 25 am Abstützelement 15 drehfest gelagert ist. Grundsätzlich ist auch eine Umkehrung dieses Prinzips möglich, das heißt eine Rotation der Mutter und eine drehfeste Lagerung der Spindel. Hierzu können zum Beispiel bekannte Hohlwellenmotoren eingesetzt werden.

Der Kniehebelmechanismus K ist in beiden Ausführungsbeispielen ein Fünf-Punkt-Kniehebel. Insofern ist an einem der beiden Kniehebel 16 des jeweiligen Kniehebelmechanismus K ein Gelenkhebel 21 gelenkig gelagert, der anderenends an der Lagerstelle 23 an der Lagerplatte 14, 14' angelenkt ist. Diese Lagerstelle 23 bewegt sich bei der Schließ- und Öffnungsbewegung in Schließrichtung s-s, wie sich aus einem Vergleich der Figuren 2 und 3 ergibt. Durch die Bewegung wird der Gelenkhebel 21 jedoch verschwenkt, was zur Überführung des Kniehebels aus der Position gemäß Fig. 3 in Strecklage gemäß Fig. 2 führt. In Strecklage sind die beiden Kniehebel 16, 17 im wesentlichen in Schließrichtung s-s gestreckt und das Kniehebelgelenk 18 befindet sich mit dem Anlenkungspunkten 19 am Abstützelement 15 und dem Anlenkungspunkt 20 am beweglichen Formträger 11 in etwa in einer Linie, die parallel zur Schließrichtung s-s ist. In der Stellung gemäß Fig. 3 haben sich die Kniehebel 16,17 der vorzugsweise vertikal übereinander angeordneten Kniehebelmechanismen bei der Öffnungsbewegung der Spritzgießform 10 aus ihrer gestreckten, innen liegenden Stellung nach außen bewegt. Dieser Bewegungsablauf trägt zu der kurzen Bauform der gesamten Formschließeinheit bei.

Um die für die Kniehebelmechanismen bedeutsame Strecklage einzustellen, ist am Abstützelement 15, 15' eine Formhöhenverstelleinrichtung 26 vorgesehen. Unter der Formhöhe wird dabei die Höhe der Spritzgießform 10 bei Formschluss zwischen beweglichem Formträger 11 und stationärem Formträger 12 verstanden, also der Abstand der Formträger beim Formschluss. Je nach diesem Abstand ist das Abstützelement 15 in Schließrichtung s-s durch die Formhöhenverstelleinrichtung 26 zu bewegen, um einen effizienten und energiesparenden Formschluss bei höchster Kraft zu erzielen. Das Abstützelement 15, 15' selbst steht über Kraftübertragungselemente mit dem stationären Formträger 12 in Verbindung. Als Kraftübertragungselemente werden im Ausführungsbeispiel Säulen oder Holme 27 verwendet, grundsätzlich können jedoch auch Kraftübertragungselemente verwendet werden, die die Kräfte um den Formspannraum herum übertragen, sodass der Raum zwischen den Formträgern nahezu frei zugänglich ist. Hierfür sind im Stand der Technik bügelartige Elemente bekannt.

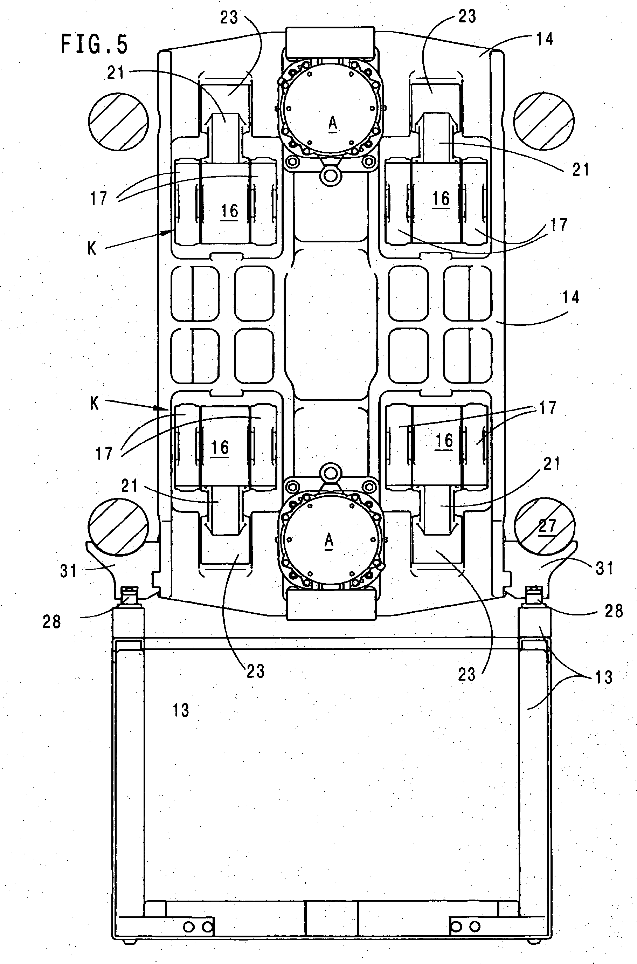

Die Lagerplatte 14 ist am Maschinenfuß 13 auf Führungen 28 gelagert, wobei durch die Führung der Platte die Genauigkeit im Wechselspiel zwischen Öffnen und Schließen beeinflusst wird. Gemäß Fig. 5 sind dazu Lager 31 vorgesehen, die die Lagerplatte 14 auf den Führungen 28 lagern. Die Lager 31 können auch so ausgebildet sein, dass die Holme 27 als Führung dienen. Die Lagerplatte kann wie in Fig. 4 dargestellt mit ihren Antrieben als eigenständige Baueinheit komplett vormontiert und dann in die Maschine eingebaut werden. Dies ermöglicht ein Testen der Funktionsfähigkeit dieser Baueinheit vor dem Verbinden mit der restlichen Spritzgießmaschine.

Die Lagerplatte ist vorzugsweise einstückig ausgebildet und ist insofern ein Multifunktionsteil. Sie dient nicht nur der Aufnahme der Antriebseinheit A mit den zugehörigen Lagern oder der Spindel 24, sie weist ebenso Lagerstellen 23 für die Kniehebelbefestigung auf und besitzt Aufnahmen für die Führungen 28 der Lagerplatte 14 am Maschinenfuß 13. Vorzugsweise sind auch Kühleinrichtungen wie Kühlkanäle 29 in der Platte oder im zweiten Ausführungsbeispiel ein Kühlmantel 33 für die Lager der Spindel 24 bzw. zur unmittelbaren Kühlung der Mutter 25 vorgesehen, wodurch die geometrische Genauigkeit als auch die Lebensdauer der Spritzgießmaschine erhöht werden. Die Kühleinrichtungen sind insbesondere an den Anschlusspunkten der Antriebseinheiten A, A' an der Lagerplatte 14, 14' vorgesehen sind Durch die Kühlung bzw. Temperierung wird an beiden Antriebseinheiten dieselbe Temperatur gewährleistet, so dass die Temperatur abhängige Längenausdehnung ebenfalls gleich ist, was damit die Präzision des gesamten System weiter steigert.

Die Position der Lagerplatte 14, 14'dient als Referenzmaß für die Werkzeugbewegung, da an ihr das Übersetzungsverhältnis vor allem beim Formschluss am genauesten ist. Dadurch lässt sich die Parallelität der Formträger und damit der Teile der Spritzgießform auch im statischen Zustand beeinflussen. Sowohl im statischen Zustand als auch im dynamischen Zustand, also bei der Formschlussbewegung, kann zum Beispiel durch entsprechende Wegmessgeber eine Regelung der Servomotoren zur Erzielung der gewünschten Parallelität erfolgen. Dabei sind die von der Lagerplatte 14, 14' zurückgelegten Wege zu Beginn der Formschlussbewegung etwa identisch mit der Bewegung des beweglichen Formträgers 11, nahe dem Formschluss bewegt sich jedoch die Lagerplatte 14 immer noch, während der bewegliche Formträger kaum noch eine Bewegung durchführt.

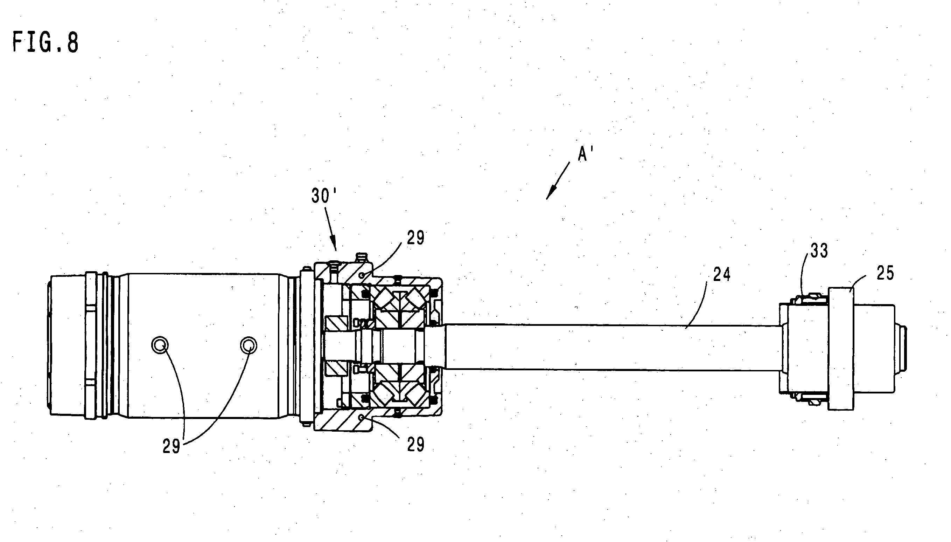

Im Ausführungsbeispiel der Fig. 6 bis 8 sind einerseits gegenüber dem ersten Ausführungsbeispiel die Anordnung von Motor und Mutter 25 vertauscht. Zudem bildet die Antriebseinheit A' gemäß Fig. 8 ein von der Lagerplatte abnehmbares Antriebsmodul, das im Wesentlichen Motor, Lager, Mutter 25 und Spindel 24 einschließlich des Kühlmantels als bauliche Einheit umfasst. Dies ist von Vorteil, wenn z.B. im Servicefall die Antriebseinheit zu wechseln ist, da die neue Einheit dann als komplette, vorgeprüfte Einheit eingesetzt werden kann.

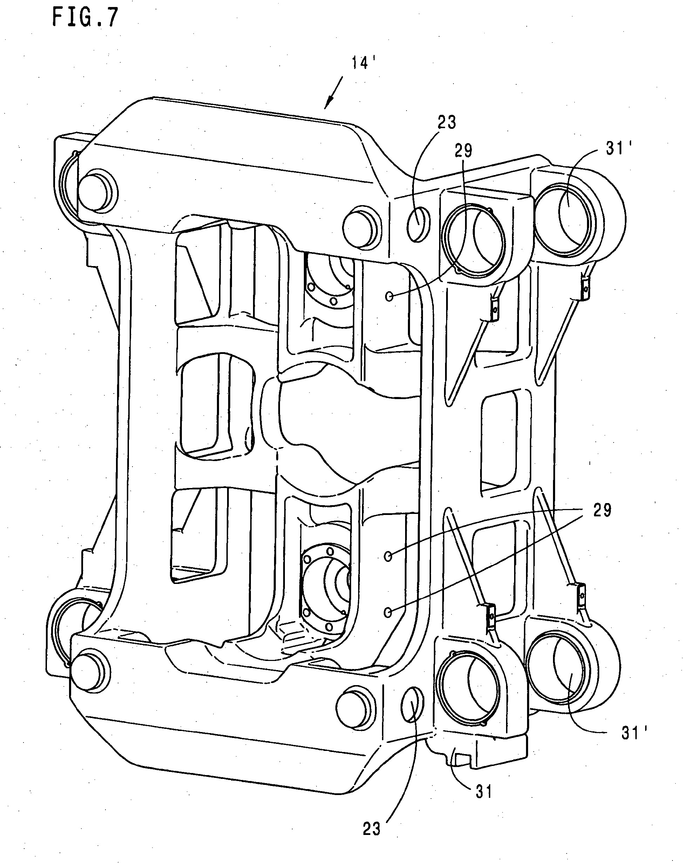

Gemäß Fig. 7 ist die Lagerlatte 14' des zweiten Ausführungsbeispiels gitterrahmenartig ausgebildet, wobei die Kniehebelmechanismen K innerhalb der als Holme ausgebildeten Kraftübertragungselemente angeordnet sind, die der Lagerplatte 14' als Führung über die Lager 31' dienen. Die damit mögliche Anordnung der Kniehebelmechanismen gegenüber der Mittelachse verhältnismäßig weit innen trägt einerseits dazu bei, dass die entstehenden Kräfte leicht abgefangen und mit weniger Durchbiegung der Lagerplatte 14' ausgeführt werden können. Andererseits fördert dies gleichzeitig den offenen Aufbau der Lagerplatte 14' als Rahmenstruktur, die zugleich den Zugang zu den Bauteilen der Formschließeinheit erleichtert.

### Bezugszeichenliste

- 10: Spritzgießform
- 11: beweglicher Formträger
- 12: stationärer Formträger
- 13: Maschinenfuß
- 14, 14': Lagerplatte
- 15, 15': Abstützelement
- 16, 17: Kniehebel
- 18: Kniehebelgelenk
- 19, 20: Anlenkungspunkt
- 21: Gelenkhebel
- 22: Anlenkungspunkt von 21
- 23: Lagerstelle
- 24: Spindel
- 25: Mutter
- 26: Formhöhenverstelleinrichtung
- 27: Holm
- 28: Führung
- 29: Kühlkanäle
- 30, 30': Lager für Antriebseinheit A
- 31, 31': Lager für Lagerplatte 14
- 32: Aufnahmegehäuse
- 33: Kühlmantel

- A, A': Antriebseinheit
- F: Formschließeinheit
- K: Kniehebelmechanismus
- s-s: Schließrichtung

## Patentansprüche

1. Spritzgießmaschine zur Verarbeitung von Kunststoffen und anderer plastifizierbarer Materialen wie pulverförmige, metallische oder keramische Massen mit einer auf einem Maschinenfuss (13) angeordneten Formschließeinheit (F) mit
- wenigstens einer zwischen stationärem Formträger (12) und beweglichem Formträger (11) aufnehmbaren Spritzgießform (10),
- wenigstens einer Kniehebelpaarung mit zwei Kniehebelmechanismen (K), die unabhängig voneinander von je einer Antriebseinheit (A; A') antreibbar sind,
- einem Kraftübertragungselement (27) zur Aufnahme der auftretenden Kräfte, das den stationären Formträger (12) mit einem Abstützelement (15; 15') verbindet,
- wobei die Kniehebelmechanismen (K) an einer beweglichen Lagerplatte (14, 14') gelagert sind, die
an der Spritzgießmaschine an Kraftübertragungselementen (27) wie Holmen und ggf. entlang von Führungen (28; Lager 31') am Maschinenfuß (13) beweglich gelagert ist,
- wobei mehrere Antriebseinheit en(A; A') an der beweglichen Lagerplatte (14; 14') gelagert sind, an der die Betätigungselemente für die wenigstens zwei Kniehebelmechanismen (K) gelagert sind,
**dadurch gekennzeichnet, dass** mehrere einander symmetrisch zur Mittelachse gegenüberliegende Kraftübertragungselemente (27) vorgesehen sind, die der Lagerplatte (14, 14') als Führung dienen, und
dass alle Antriebseinheiten (A; A') an der beweglichen Lagerplatte (14; 14') beabstandet von den Kraftübertragungselementen (27) gelagert sind.

2. Spritzgießmaschine nach Anspruch 1, **dadurch gekennzeichnet, dass** der Kniehebelmechanismus (K) einenends an einem Formträger, vorzugsweise am beweglichen Formträger (11), gelenkig gelagert ist und anderenends an einem Abstützelement (15; 15') gelagert ist, wobei die Lagerplatte (14, 14') zwischen dem Formträger und dem Abstützelement angeordnet ist.

3. Spritzgießmaschine nach Anspruch 1 oder 2, **dadurch gekennzeichnet, dass** ein von der einenends an der Lagerplatte (14) gelagerten Antriebseinheit (A) betriebener Antriebsmechanismus anderenends an einem Abstützelement (15) gelagert ist, an dem auch der Kniehebelmechanismus gelagert ist.

4. Spritzgießmaschine nach einem der vorhergehenden Ansprüche, **dadurch gekennzeichnet, dass** die Antriebseinheit (A) ein servoelektrischer Motor ist, der einen Spindelmechanismus antreibt, wobei Spindel (24) oder Mutter (25) von der an der Lagerplatte (14) gelagerten Antriebseinheit (A) angetrieben werden, während Mutter (25) oder Spindel (24) am Abstützelement (15) drehfest gelagert sind.

5. Spritzgießmaschine nach einem der vorhergehenden Ansprüche, **dadurch gekennzeichnet, dass** ein einenends an einem der beiden Kniehebel (16) des jeweiligen Kniehebelmechanismus (K) gelenkig gelagerter Gelenkhebel (21) anderenends an einer Lagerstelle (23) der Lagerplatte (14, 14') gelenkig gelagert ist.

6. Spritzgießmaschine nach einem der vorhergehenden Ansprüche, **dadurch gekennzeichnet, dass** die Kniehebel (16,17) der vertikal übereinander angeordneten Kniehebelmechanismen sich bei der Öffnungsbewegung der Spritzgießform (10) von ihrer gestreckten, innen liegenden Stellung nach außen bewegen.

7. Spritzgießmaschine nach einem der vorhergehenden Ansprüche, **dadurch gekennzeichnet, dass** die Lagerplatte (14') gitterrahmenartig ausgebildet ist, wobei die Kniehebelmechanismen (K) innerhalb der als Holme ausgebildeten Kraftübertragungselemente angeordnet sind.

8. Spritzgießmaschine nach einem der vorhergehenden Ansprüche, **dadurch gekennzeichnet, dass** Kühleinrichtungen (29, 33) zur Temperierung der Antriebseinheiten insbesondere an den Anschlusspunkten der Antriebseinheiten an der Lagerplatte (14; 14') vorgesehen sind. I

## Claims

1. An injection moulding machine for processing plastics and other plastifiable materials, such as pulverulent, metallic or ceramic compositions, with a mould closing unit (F) arranged on a machine foot (13), comprising
- at least one injection mould (10) which may be accommodated between a stationary mould carrier (12) and a movable mould carrier (11),
- at least one toggle pair with two toggle mechanisms (K), which may each be driven mutually independently by a drive unit (A; A'),
- a force transmission element (27) for absorbing the forces arising, which force transmitting element connects the stationary mould carrier (12) with a supporting element (15, 15'),
- the toggle mechanisms (K) being mounted on a movable bearing plate (14, 14'),the movable bearing plate (14; 14') being mounted on the injection moulding machine so as to be movable on force transmitting elements (27) such as beams and, if required, along guides (28; bearing 31') on the machine foot (13),
- a plurality of the drive units (A; A') being mounted on the movable bearing plate (14; 14'), on which the actuating elements for the at least two toggle mechanisms (K) are mounted,
**characterised in that** a plurality of force transmitting elements (27) is provided, which force transmitting elements are arranged on mutually opposite sides symmetrically to a centre axis and guide the movable bearing plate (14, 14'), and
**in that** all drive units (A, A') are mounted on the movable bearing plate (14, 14') distant to the force transmitting elements (27).

2. An injection moulding machine according to claim 1, **characterised in that** the toggle mechanism (K) is mounted in an articulated manner at one end on a mould carrier, preferably on the movable mould carrier (11), and at the other end on a supporting element (15; 15'), the bearing plate (14, 14') being arranged between the mould carrier and the supporting element.

3. An injection moulding machine according to claim 1 or claim 2, **characterised in that** a drive mechanism operated by the drive unit (A) mounted at one end on the bearing plate (14) is mounted at the other end on a supporting element (15), on which the toggle mechanism is also mounted.

4. An injection moulding machine according to any one of the preceding claims, **characterised in that** the drive unit (A) is a servo-electric motor, which drives a spindle mechanism, wherein spindle (24) or nut (25) are driven by the drive unit (A) mounted on the bearing plate (14), while nut (25) or spindle (24) are mounted non-rotatably on the supporting element (15).

5. An injection moulding machine according to any one of the preceding claims, **characterised in that** an articulated lever (21) mounted in articulated manner at one end on one of the two toggles (16) of the respective toggle mechanism (K) is mounted at the other end in articulated manner at a bearing point (23) of the bearing plate (14, 14').

6. An injection moulding machine according to any one of the preceding claims, **characterised in that** during the opening movement of the injection mould (10) the toggles (16, 17) of the toggle mechanisms arranged vertically one above the other move outwards from their extended, inner position.

7. An injection moulding machine according to any one of the preceding claims, **characterised in that** the bearing plate (14') is of grid frame-like construction, the toggle mechanisms (K) being arranged within the force transmission elements configured as beams.

8. An injection moulding machine according to any one of the preceding claims, **characterised in that** cooling devices (29, 33) for temperature control of the drive units are provided in particular at the points at which the drive units are connected to the bearing plate (14; 14').

## Revendications

1. Machine pour moulage par injection pour la fabrication de matières plastiques et d'autres matériaux plastifiables comme des masses pulvérulentes métalliques ou céramiques, ayant une unité de fermeture de moule (F) disposée sur un socle de machine (13) et
- au moins un moule à injection (10) qui peut être logé entre un support de moule stationnaire (12) et un support de moule mobile (11),
- au moins un accouplement à genouillère ayant deux mécanismes à genouillère (K), qui peuvent être entraînés indépendamment l'un de l'autre par une unité d'entraînement respective (A ; A'),
- un élément de transmission de force (27) pour la prise en charge des forces enjeu, lequel relie le support de moule stationnaire (12) à un élément de support (15 ; 15'),
- dans laquelle les mécanismes à genouillère (K) sont montés sur une semelle d'appui mobile (14, 14') qui est montée mobile sur la machine à moulage par injection sur des éléments de transmission de force (27) tels que des barres et, le cas échéant, le long de glissières (28 ; coussinet 31') sur le socle de machine (13) ;
- dans laquelle plusieurs unités d'entraînement (A ;A') sont montées sur la semelle d'appui mobile (14,14') sur laquelle les éléments d'actionnement pour les deux mécanismes à genouillère (K) au moins sont montés,
**caractérisée en ce que** plusieurs éléments de transmission de force (27) sont prévus situés face à face symétriquement par rapport à l'axe central et servent de guidage à la semelle d'appui (14,14'), et
**en ce que** toutes les unités d'entraînement (A ;A') sont montées sur la semelle d'appui mobile (14 ;14') à distance des éléments de transmission de force (27).

2. Machine pour moulage par injection selon la revendication 1, **caractérisée en ce que** le mécanisme à genouillère (K) est monté articulé à une extrémité à un support de moule, de préférence au support de moule mobile (11) et à une autre extrémité à un élément d'appui (15 ; 15'), la semelle d'appui (14,14') étant disposée entre le support de moule et l'élément d'appui.

3. Machine pour moulage par injection selon la revendication 1 ou 2, **caractérisée en ce qu'**un mécanisme d'entraînement entraîné par l'unité d'entraînement (A) montée à une extrémité sur la semelle d'appui (14) est monté à une autre extrémité sur un élément d'appui (15), sur lequel le mécanisme à genouillère est également monté.

4. Machine pour moulage par injection selon l'une des revendications précédentes, **caractérisée en ce que** l'unité d'entraînement (A) est un moteur servo-électrique qui entraîne un mécanisme à broche, la broche (24) ou l'écrou (25) étant entraînés par l'unité d'entraînement montée sur la semelle d'appui (14), tandis que l'écrou (25) ou la broche (24) sont montés sans pouvoir tourner sur l'élément d'appui (15).

5. Machine pour moulage par injection selon l'une ou l'autre des revendications précédentes, caractérisée en qu'un levier articulé (21) monté de manière articulée à une extrémité sur une des deux genouillères (16) du mécanisme à genouillère respectif (K) est monté de manière articulée à une autre extrémité sur un emplacement de montage (23) de la semelle d'appui (14,14').

6. Machine pour moulage par injection selon l'une des revendications précédentes, **caractérisée en ce que** les genouillères (16,17) des mécanismes à genouillère disposés verticalement l'un au-dessus de l'autre se déplacent, lors du déplacement d'ouverture du moule à injection (10), de leur position étirée, située à l'intérieur, vers l'extérieur.

7. Machine pour moulage par injection selon l'une des revendications précédentes, **caractérisée en ce que** la semelle d'appui (14') est réalisée sous la forme d'un cadre muni d'une grille, les mécanismes à genouillère (K) étant disposés à l'intérieur des éléments de transmission de force réalisés sous forme de barre.

8. Machine pour moulage par injection selon l'une des revendications précédentes, **caractérisée en ce que** des moyens de refroidissement (29,33) sont prévus pour le refroidissement des unités d'entraînement, en particulier au niveau des points de raccord des unités d'entraînement à la semelle d'appui (14 ; 14').
